# FASCICULE DE BREVET EUROPEEN

(11) **EP 1 795 397 B1**
(45) Date de publication et mention de la délivrance du brevet: **01.04.2009**
(21) Numéro de dépôt: 06301148.0
(22) Date de dépôt: 15.11.2006
(51) Int. Cl.: B60R 7/04

(54) **Agencement de moyens de rangement dans un habitacle de véhicule automobile**
Anordnungselement für Aufbewahrung in einem Kraftfahrzeuginnenraum
Arrangement of storage means in a vehicle passenger compartment

(30) Priorité: 06.12.2005 FR 0553749
(43) Date de publication de la demande: 13.06.2007
(73) Titulaire: RENAULT S.A.S., 92100 Boulogne Billancourt (FR)
(72) Inventeur: Guerrier, Pierre, 75020, PARIS (FR)

(56) Documents cités:
- FR-A- 1 436 218
- FR-A- 2 033 779
- FR-A- 2 840 568
- US-A- 5 894 973
- US-A- 6 024 400

## Description

### DOMAINE TECHNIQUE

La présente invention concerne un agencement d'un ou plusieurs moyens de rangement dans un habitacle de véhicule automobile. L'invention se rapporte également plus spécifiquement à un siège destiné à un véhicule automobile et comprenant au moins un moyen de rangement.

Les constructeurs automobiles tendent de plus en plus à améliorer la modularité et l'aspect convivial de leurs véhicules. De façon à optimiser et à utiliser au maximum l'espace disponible, tous les véhicules sont équipés de moyens de rangements. Des moyens de rangements sont formés à l'intérieur du coffre, dans les portières, sur et dans le tableau de bord avec une boîte à gants, dans la garniture intérieure du toit de l'habitacle, à l'arrière du pare-soleil pivotant, dans la console centrale, entre les deux sièges et au niveau des sièges sous l'assise avec un tiroir coulissant et à d'autres endroits encore.

### ÉTAT DE LA TECHNIQUE ANTÉRIEURE

Il est courant d'utiliser une poche, également connue sous le nom d'aumônière placée au niveau des sièges, par exemple sur la face arrière du siège du conducteur et/ou du siège du passager avant. La poche comprend des flancs latéraux pouvant être munis de soufflets élastiques, ce qui permet d'insérer les objets un peu plus volumineux.

Des rangements rigides avec une coque plastique sont également prévus sur le dos de sièges, formant de véritables coffres fourre-tout, dans lesquels l'utilisateur peut glisser un recueil de cartes routières, des magazines, des DVD, etc.

Des filets de rangement, en forme de quadrilatère, dont trois côtés sont fixés sur une surface plane de l'habitacle, le quatrième côté étant pourvu d'un élastique, sont quelques fois montés, par exemple dans le coffre.

Cependant, ces solutions sont souvent limitées aux dossiers des sièges. La localisation de cet espace rend les rangements souvent difficilement accessibles pour le conducteur ou le passager avant. Ces rangements nécessitent l'ajout de pièces rapportées, telles que le tissu de la poche, le filet de maintien ou bien la coque en plastique. De plus, lors de la fabrication du siège, l'installation de ce moyen de rangement, avec la poche, nécessite des opérations de montage supplémentaires, plus longues, compliquant la fabrication et accroissant le coût. Ces moyens de rangements ne permettent pas forcément un bon maintien de grands objets tels que des magazines, car ils ont tendance à se plier, ce qui les abîme et les rend difficiles d'accès. Le rangement de petits objets (tels que cartes, tickets, stylos) n'est pas toujours facile, car ils sont souvent perdus au fond de la poche. Enfin, ces solutions ne sont pas toujours esthétiques.

### EXPOSÉ DE L'INVENTION

Un problème principal que se propose de résoudre l'invention consiste à mettre au point un véhicule automobile, dont l'habitacle est muni d'un ou plusieurs moyens de rangement. Un deuxième problème est d'optimiser l'emplacement et le nombre de rangements dans l'habitacle du véhicule. Un troisième problème consiste à réaliser une bonne intégration des zones de rangements à l'intérieur du véhicule, notamment au niveau des sièges, tant d'un point de vue esthétique, qu'au niveau de l'encombrement. Un quatrième problème est de prévoir des moyens de rangement qui soient directement accessibles, pratiques et faciles à utiliser pour l'utilisateur. Un cinquième problème est d'obtenir un habitacle intégrant un ou des moyens de rangement et n'exigeant qu'une faible modification du montage de ses composants. Un autre problème encore est la nécessité d'avoir des moyens de rangement simples, comportant peu de pièces et à faible coût.

L'invention concerne donc un agencement d'au moins un moyen de rangement, dans un habitacle de véhicule automobile, sur au moins un élément de l'habitacle, dont une structure interne est recouverte par au moins un habillage extérieur.

Conformément à un aspect de la présente invention, l'agencement est caractérisé en ce que l'habillage extérieur comprend au moins une découpe, formant au moins une ouverture, et dépourvu de solidarisation avec la structure interne de l'élément de l'habitacle sur toute ou partie d'une périphérie de la découpe, constituant un système de blocage d'un objet entre l'habillage extérieur et la structure interne sur toute ou partie de la périphérie de la découpe, de façon à former le moyen de rangement.

Autrement dit, un glissement et un maintien par coincement d'un ou plusieurs objets à ranger peut être effectué entre l'habillage et la structure interne. Le ou les objets devant être rangés sont insérés par l'ouverture découpée. En raison de la désolidarisation de l'habillage autour des découpes, il se crée une zone dans laquelle peuvent être maintenus le ou les objets devant être rangés. Une découpe dans l'habillage permet d'y glisser des objets relativement plats, et de toutes dimensions, tels que des magazines, des cartes routières, des tickets, et d'autres encore.

Le terme habitacle inclut le volume intérieur du véhicule prévu pour le conducteur et les passagers. Le terme élément inclut toutes les parties constitutives s'insérant à l'intérieur de ce volume intérieur, à titre d'exemple, les sièges, la banquette arrière, les portes, la planche de bord, et d'autre encore.

De manière particulièrement favorable, et dans un exemple de réalisation d'un moyen de rangement, un espace peut être ménagé entre le ou les habillages extérieurs et la structure interne, au niveau de toute ou partie de la périphérie de la ou des découpes. Cet espace permet de placer des objets possédant une épaisseur plus importante.

Afin de ne pas laisser apparente la structure interne de l'habitacle, le moyen de rangement peut comprendre une pièce de décoration plaquée contre la structure interne, au niveau de la ou les découpes. La ou les découpes peuvent préférentiellement présenter une forme globalement arrondie, de façon à former un médaillon. En outre, cet agencement des moyens de rangement permet facilement des variations esthétiques, en jouant sur le contraste entre l'habillage et la découpe, par des différences de couleurs ou de matière, etc.

Dans un premier exemple de réalisation, l'élément de l'habitacle peut être une planche de bord. Dans un deuxième exemple de réalisation, l'élément de l'habitacle peut être un panneau intérieur de porte. Dans un troisième exemple de réalisation, l'élément de l'habitacle peut être un siège.

Dans une première disposition particulièrement avantageuse, la ou les découpes peuvent être ménagées au niveau d'une face arrière d'un dossier du siège, selon le troisième exemple de réalisation. Cette position des moyens de rangement est plus particulièrement accessible au(x) passager(s) arrière(s). Ce moyen de rangement est alors suffisamment grand pour accueillir un magazine, qui peut être ainsi maintenu par plusieurs de ses côtés, ce qui améliore son maintien et limite sa déformation. Il reste de plus facile à extraire du rangement.

Dans une deuxième disposition particulièrement avantageuse, la ou les découpes peuvent être ménagées au niveau d'au moins une face latérale d'une assise du siège, selon le troisième exemple de réalisation. Le siège peut comprendre un ou plusieurs bossages, au niveau d'au moins une face latérale d'une assise. Le ou les bossages peuvent faire saillis vers le haut à partir d'un plan formé par l'assise. La ou les découpes peuvent être favorablement ménagées sur la ou les faces latérales au niveau du ou des bossages. Cette position des moyens de rangement est plus particulièrement prévue pour le siège du conducteur et celui du passager avant. Un tel rangement constitue une poche de rangement de ticket de parking ou d'autoroute pour le conducteur. Ces moyens de rangement peuvent facilement être utilisés, sans que le conducteur n'ait à quitter la route des yeux, c'est-à-dire à tâtons.

Dans une troisième disposition particulièrement avantageuse, la ou les découpes peuvent être ménagées au niveau d'une face arrière d'un élément formant un appui-tête pour le siège, selon le troisième exemple de réalisation. Cette position des moyens de rangement est plus particulièrement accessible au(x) passager(s) arrière(s), adultes ou de plus grande taille, pouvant remonter les bras pour atteindre l'appui-tête.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective avant d'un siège comprenant des moyens de rangement latéraux, selon l'invention ;
- la Figure 2 représente une vue en perspective arrière d'un siège comprenant trois moyens de rangement, selon l'invention ;
- la Figure 3 représente une vue en perspective agrandie d'un moyen de rangement ;
- la Figure 4 représente une vue en perspective agrandie d'un moyen de rangement selon une deuxième disposition sur le siège ;
- la Figure 5 représente une vue de face agrandie d'un moyen de rangement selon une troisième disposition sur le siège ;
- la Figure 6 représente une vue en coupe partielle d'un moyen de rangement ; et
- la Figure 7 représente une vue en coupe partielle d'un moyen de rangement selon un autre exemple de réalisation.

### EXPOSÉ DÉTAILLÉ DE MODES DE RÉALISATION PRÉFÉRÉS

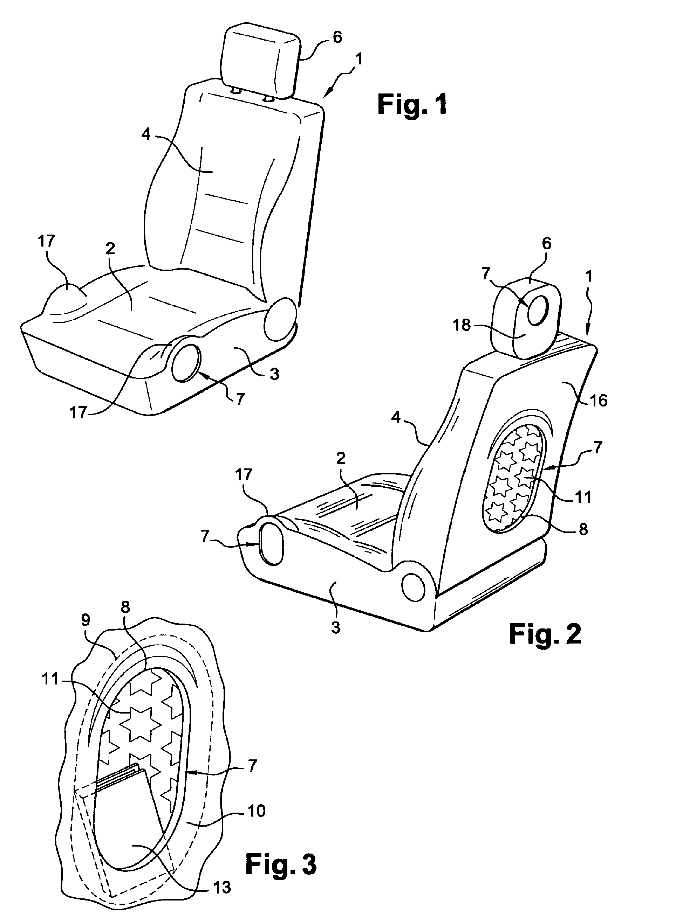

Comme l'illustrent les Figures 1 et 2, un siège (1) comprend une assise (2), présentant deux côtés latéraux (3), et un dossier (4) au-dessus duquel est monté un appui-tête (6). Des moyens de rangement (7) sont prévus dans un habitacle d'un véhicule automobile ou dans ses parties constitutives, ici représentées, à titre d'exemple uniquement, comme étant le siège (1).

Conformément à l'invention, ces moyens de rangement (7) consistent à ménager une découpe (8) dans le matériau constitutif de l'habillage de l'habitacle (9), donc dans le cas présent, dans le matériau recouvrant le siège (1). Une pièce formant une décoration (11) est insérée à l'intérieur de la découpe (8), de façon à cacher la structure interne de l'habitacle (12) dans un souci d'esthétique.

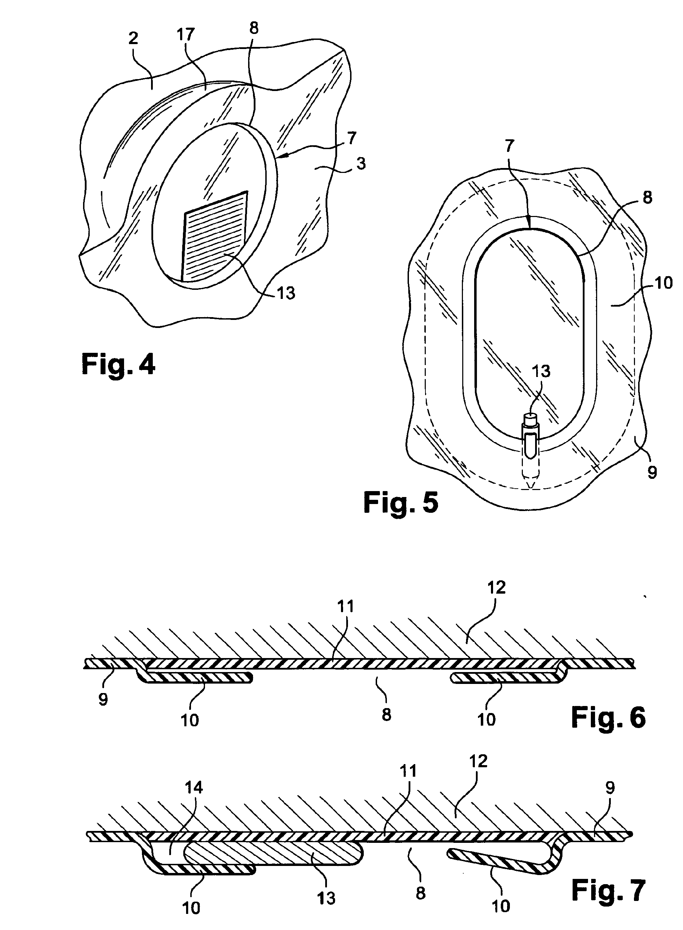

Comme cela est plus particulièrement représenté dans les Figures 6 et 7, le matériau constitutif de l'habillage (9) forme une zone décollée, se présentant sous la forme d'un volet périphérique (10). Ce volet (10) n'est pas solidarisé à la structure interne (12), au niveau de la périphérie des ouvertures (8).

Cette absence de liaison entre la structure interne (12) et l'habillage (9), sur une largeur donnée, permet à des objets (13), tels qu'un magazine, un stylo, etc., d'y être glissés, coincés et maintenus.

Dans un autre mode de réalisation (voir Figure 7), le matériau constitutif de l'habillage (9) est véritablement décalé de la structure interne (12), créant un espacement (14) autour de l'ouverture (8) entre le volet (10) et cette même structure interne (12).

Le matériau constitutif de la structure interne (12) peut être un habillage interne ou une mousse d'absorption ou des métaux constitutifs de la structure interne elle-même. Comme le montre plus particulièrement les Figures 1 à 5, la découpe (8) présente une forme globalement arrondie, par exemple ovoïde.

Dans une première localisation sur le siège (1), les moyens de rangement (7) sont prévus au niveau d'une face arrière (16) du dossier (4) du siège (1). La découpe (8) est réalisée dans le matériau constitutif (9), par exemple du tissu ou du cuir.

Dans une deuxième localisation sur le siège (1), les moyens de rangement (7) sont prévus sur les côtés latéraux (3) de l'assise (2) du siège (1). Au niveau de l'assise (2), des bossages (17) sont ménagés et font légèrement saillie vers le haut à partir du plan supérieur constitué globalement par l'assise (2). Au niveau de ces deux bossages (17), sont prévus les moyens de rangement (7), accessibles ainsi latéralement à l'utilisateur du siège (1).

Dans une troisième localisation sur le siège (1), les moyens de rangement (7) sont prévus au niveau de la face arrière (18) de l'appuie-tête (6).

La présente invention n'est pas limitée aux modes de réalisation décrits et illustrés. De nombreuses modifications peuvent être réalisées, sans pour autant sortir du cadre défini par la portée du jeu de revendications.

On peut facilement disséminer plusieurs de ces rangements (7) dans l'habitacle ou dans toutes ses parties entrant dans son volume, pour qu'ils puissent être utilisés par les passagers ou le conducteur.

La découpe (8) peut aussi être effectuée dans d'autres habillages (9) de l'habitacle, tels que des habillages de porte ou des habillages de planche de bord, par exemple. Les découpes (8) peuvent aussi être effectuées dans des habillages plus rigides tels que des plastiques. Ces habillages sont alors suffisamment souples et élastiques, pour laisser le passage à des objets plats (13), de façon à les pincer, puis pour reprendre leur forme initiale une fois les objets retirés.

## Revendications

1. Agencement d'au moins un moyen de rangement (7), dans un habitacle de véhicule automobile, sur au moins un siège (1), dont une structure interne (12) est recouverte par au moins un habillage extérieur (9), l'habillage extérieur (9) comprenant au moins une découpe (8), formant au moins une ouverture, et dépourvu de solidarisation avec la structure interne (12) du siège (1) sur toute ou partie d'une périphérie (10) de la découpe (8), constituant un système de blocage d'un objet (13) entre l'habillage extérieur (9) et la structure interne (12) sur toute ou partie de la périphérie (10) de la découpe (8), de façon à former le moyen de rangement (7), **caractérisé en ce que** le moyen de rangement (7) comprend une pièce de décoration (11) plaquée contre la structure interne (12), au niveau de la ou les découpes (8).

2. Agencement selon la revendication 1, **caractérisé en ce qu'**un espace (14) est ménagé entre le ou les habillages extérieurs (9) et la structure interne (12), au niveau de toute ou partie de la périphérie (10) de la ou des découpes (8).

3. Agencement selon l'une quelconque des revendications précédentes, **caractérisé en ce que** la ou les découpes (8) présentent une forme globalement arrondie.

4. Agencement selon l'une quelconque des revendications précédentes, **caractérisé en ce que** la ou les découpes (8) sont ménagées au niveau d'une face arrière (16) d'un dossier (4) du siège (1).

5. Agencement selon l'une quelconque des revendications précédentes, **caractérisé en ce que** la ou les découpes (8) sont ménagées au niveau d'au moins une face latérale (3) d'une assise (2) du siège (1).

6. Agencement selon l'une quelconque des revendications précédentes, **caractérisé en ce que** le siège (1) comprend un ou plusieurs bossages (17), au niveau d'au moins une face latérale (3) d'une assise (2), et faisant saillis vers le haut à partir d'un plan formé par l'assise (2), la ou les découpes (8) étant ménagées au niveau du ou des bossages (17).

7. Agencement selon l'une quelconque des revendications précédentes, **caractérisé en ce que** la ou les découpes (8) sont ménagées au niveau d'une face arrière (18) d'un élément formant un appui-tête (6) pour le siège (1).

## Claims

1. Arrangement of at least one storage means (7) in a motor vehicle passenger compartment, on at least one seat (1) of which an internal structure (12) is covered by at least an outer covering (9), the outer covering (9) comprising at least one cut-out (8) forming at least one opening, and with no means of attachment to the internal structure (12) of the seat (1) over all or part of a periphery (10) of the cut-out (8), constituting a system for immobilizing an object (13) between the outer covering (9) and the internal structure (12) over all or part of the periphery (10) of the cut-out (8) so as to form the storage means (7), **characterized in that** the storage means (7) comprises a decorative part (11) pressed against the internal structure (12) in the region of the cut-out or cut-outs (8).

2. Arrangement according to Claim 1, **characterized in that** a space (14) is created between the outer covering or coverings (9) and the internal structure (12) around all or part of the periphery (10) of the cut-out or cut-outs (8).

3. Arrangement according to any one of the preceding claims, **characterized in that** the cut-out or cut-outs (8) has or have a rounded overall shape.

4. Arrangement according to any one of the preceding claims, **characterized in that** the cut-out or cut-outs (8) is or are created on a rear face (16) of a backrest (4) of the seat (1).

5. Arrangement according to any one of the preceding claims, **characterized in that** the cut-out or cut-outs (8) are created on at least one lateral face (3) of a seat cushion (2) of the seat (1).

6. Arrangement according to any one of the preceding claims, **characterized in that** the seat (1) comprises one or more bosses (17) on at least one lateral face (3) of a seat cushion (2) and projecting upwards from a plane formed by the seat cushion (2), the cut-out or cut-outs (8) being created in the boss or bosses (17).

7. Arrangement according to any one of the preceding claims, **characterized in that** the cut-out or cut-outs (8) is or are created on a rear face (18) of an element that acts as a headrest (6) for the seat (1).

## Patentansprüche

1. Anordnung mindestens eines Ablagemittels (7) in einem Kraftfahrzeugfahrgastraum an mindestens einem Sitz (1), dessen Innenstruktur (12) durch mindestens eine Außenverkleidung (9) abgedeckt ist, wobei die Außenverkleidung (9) mindestens einen Ausschnitt (8) umfasst, der mindestens eine Öffnung bildet, und über den gesamten oder einen Teil eines Umfangs (10) des Ausschnitts (8) nicht fest mit der Innenstruktur (12) des Sitzes (1) verbunden ist, was ein System zur Blockierung eines Gegenstands (13) zwischen der Außenverkleidung (9) und der Innenstruktur (12) über den gesamten oder einen Teil des Umfangs (10) des Ausschnitts (8) darstellt, so dass das Ablagemittel (7) gebildet wird, **dadurch gekennzeichnet, dass** das Ablagemittel (7) ein Zierteil (11) umfasst, das im Bereich des Ausschnitts (8) oder der Ausschnitte (8) an die Innenstruktur (12) angedrückt ist.

2. Anordnung nach Anspruch 1, **dadurch gekennzeichnet, dass** zwischen der oder den Außenverkleidung/en (9) und der Innenstruktur (12) um den gesamten oder einen Teil des Umfangs (10) des Ausschnitts (8) oder der Ausschnitte (8) herum ein Raum (14) vorgesehen ist.

3. Anordnung nach einem der vorhergehenden Ansprüche, **dadurch gekennzeichnet, dass** der oder die Ausschnitt/e (8) eine insgesamt abgerundete Form hat/haben.

4. Anordnung nach einem der vorhergehenden Ansprüche, **dadurch gekennzeichnet, dass** der oder die Ausschnitt/e (8) an einer hinteren Fläche (16) einer Rückenlehne (4) des Sitzes (1) vorgesehen ist/sind.

5. Anordnung nach einem der vorhergehenden Ansprüche, **dadurch gekennzeichnet, dass** der oder die Ausschnitt/e (8) an mindestens einer Seitenfläche (3) eines Sitzpolsters (2) des Sitzes (1) vorgesehen ist/sind.

6. Anordnung nach einem der vorhergehenden Ansprüche, **dadurch gekennzeichnet, dass** der Sitz (1) an mindestens einer Seitenfläche (3) eines Sitzpolsters (2) einen oder mehrere Buckel (17) umfasst, die von einer durch das Sitzpolster (2) gebildeten Ebene nach oben vorragen, wobei der oder die Ausschnitt/e (8) in dem oder den Buckel/n (17) vorgesehen ist/sind.

7. Anordnung nach einem der vorhergehenden Ansprüche, **dadurch gekennzeichnet, dass** der oder die Ausschnitt/e (8) an einer hinteren Fläche (18) eines eine Kopfstütze (6) für den Sitz (1) bildenden Elements vorgesehen ist/sind.
